Europäisches Patentamt

European Patent Office

Office européen des brevets

(11) Publication number: **0 430 672 A2**

# EUROPEAN PATENT APPLICATION

(21) Application number: 90312950.0

(51) Int. Cl.⁵: **G11B 5/39**

(22) Date of filing: **28.11.90**

(30) Priority: **29.11.89 US 443302**

(43) Date of publication of application:
**05.06.91 Bulletin 91/23**

(84) Designated Contracting States:
**DE FR GB Bulletin 3**

(71) Applicant: **International Business Machines
Corporation
Old Orchard Road
Armonk, N.Y. 10504(US)**

(72) Inventor: **Voegeli, Otto
13465 Sycamore Avenue
Morgan Hill, CA 95037(US)**

(74) Representative: **Bailey, Geoffrey Alan
IBM United Kingdom Limited Intellectual
Property Department Hursley Park
Winchester Hampshire SO21 2JN(GB)**

(54) **Magnetoresistive transducer.**

(57) A magnetoresistive (MR) read transducer comprising an MR layer (11) having longitudinally magnetized end regions (14) separated by a central active region (12) and a soft magnetic biasing layer (18) parallel to but spaced from the MR layer. The easy axes of the MR layer and the soft magnetic biasing layer are tilted at a small angle with respect to the longitudinal axis of the transducer and these angles are substantially equal, but in the opposite sense.

FIG. 3

## MAGNETORESISTIVE TRANSDUCER

The invention relates to thin film magnetic heads and, more particularly, to a magnetic head having a magnetoresistive read transducer. The invention finds particular but not exclusive application in magnetic storage devices.

The use of a magnetoresistive (MR) sensor to sense magnetically recorded data has been known for many years. It is also known that both longitudinal and transverse bias can be provided to eliminate Barkhausen noise and to maintain the sensor in its most linear operating range.

U.S. Patent 3,887,944 discloses an integrated array of side-by-side MR read heads. To eliminate crosstalk between adjacent MR read heads, a region of high coercivity material is formed between adjacent MR sensors. One of the ways discussed to produce the region of high coercivity material is by exchange coupling between an antiferromagnetic material and the MR sensor.

U.S. Patent 3,848,217 discloses an MR device which has the easy axis set at an angle of about 45 degrees with respect to the longitudinal axis of the sensor. The MR element is enclosed between two shields into one of which is induced a magnetization set 180 degrees from that in the MR element.

U.S. Patent 4,535,375 shows an MR sensor in which a barber pole structure is provided to bias the sensor. The point of the invention is that the output signal is read over two of the spaced conductors forming part of the barber pole structure so that the output signal is read over the central region without any contribution from the end regions.

U.S. Patent 4,649,447 discloses an MR sensor in which elongated attachments formed contiguous with the MR element are unidirectionally magnetized along their length to produce a bias at an angle to the longitudinal axis of the sensor.

The prior art does not show an MR sensor in which the easy axis of the MR element and the soft magnetic biasing layer are tilted at an acute angle to the longitudinal axis of the sensor which is substantially equal, but in the opposite sense.

The present invention provides an MR read transducer comprising a thin film of magnetoresistive magnetic material having longitudinally magnetized end regions separated by a central region and a thin film of soft magnetic material superimposed parallel to but spaced from the MR layer. The MR layer has an easy axis of magnetisation which is tilted at a predetermined angle with respect to the longitudinal axis of the sensor, and the thin film of soft magnetic material has an easy axis of magnetisation tilted by substantially the same predetermined angle with respect to the longitudinal axis but having an opposite sense to that of the MR layer.

In order that the invention will be fully understood, a preferred embodiment thereof will now be described with reference to the accompanying drawings in which:

Fig. 1 is a plan view of a preferred embodiment of a magnetoresistive (MR) transducer according to the present invention;

Fig. 2 is a section view taken along lines 2 - 2 of Fig. 1;

Fig. 3 is an end view of the MR transducer of Figs. 1 and 2;

Figs. 4a - 4d comprise sketches showing the magnetic field applicable to an MR transducer;

Figs. 5a - 5c comprise sketches showing the superposition of all magnetic field acting on the MR transducer of Figs. 1 - 3;

Figs. 6a - 6c comprise sketches showing the effect of changes in the magnetization profile of the MR transducer of Figs. 1 - 3;

Figs. 7a - 7b comprise sketches showing the magnetic field applicable to the MR layer and the soft magnetic layer respectively when their easy axis is canted in opposite directions according to the present invention, and

Fig. 8 is a sketch showing the magnetization configuration of the MR sensor layer and the soft magnetic layer according to the present invention.

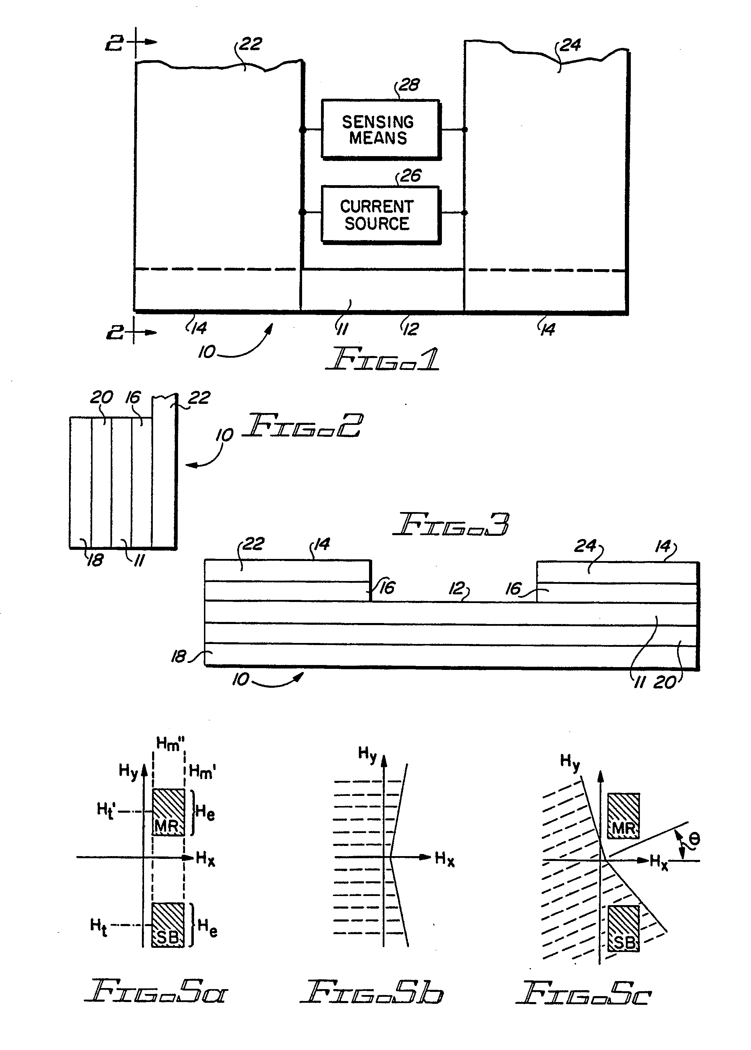

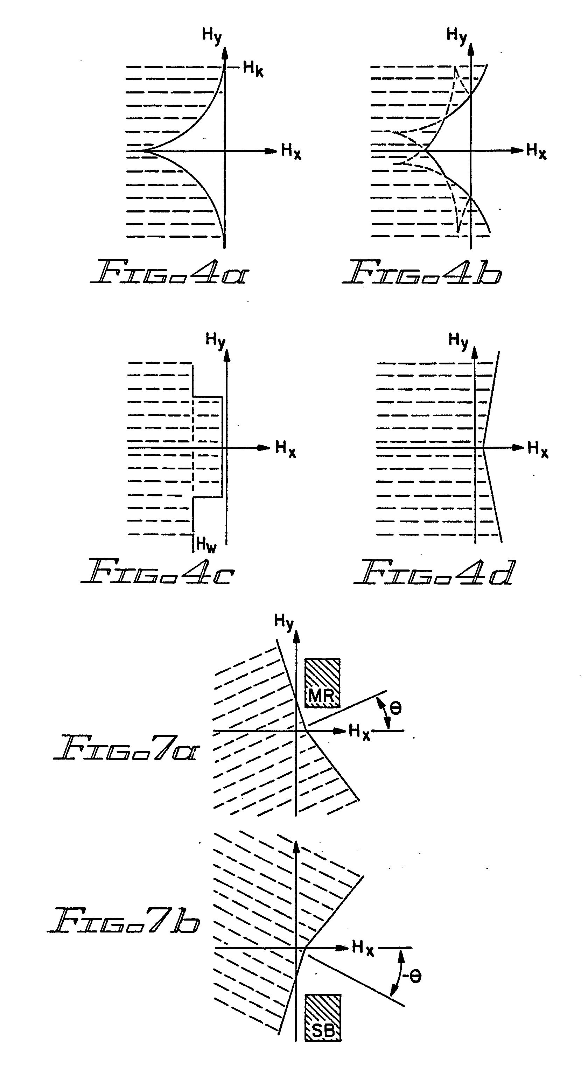

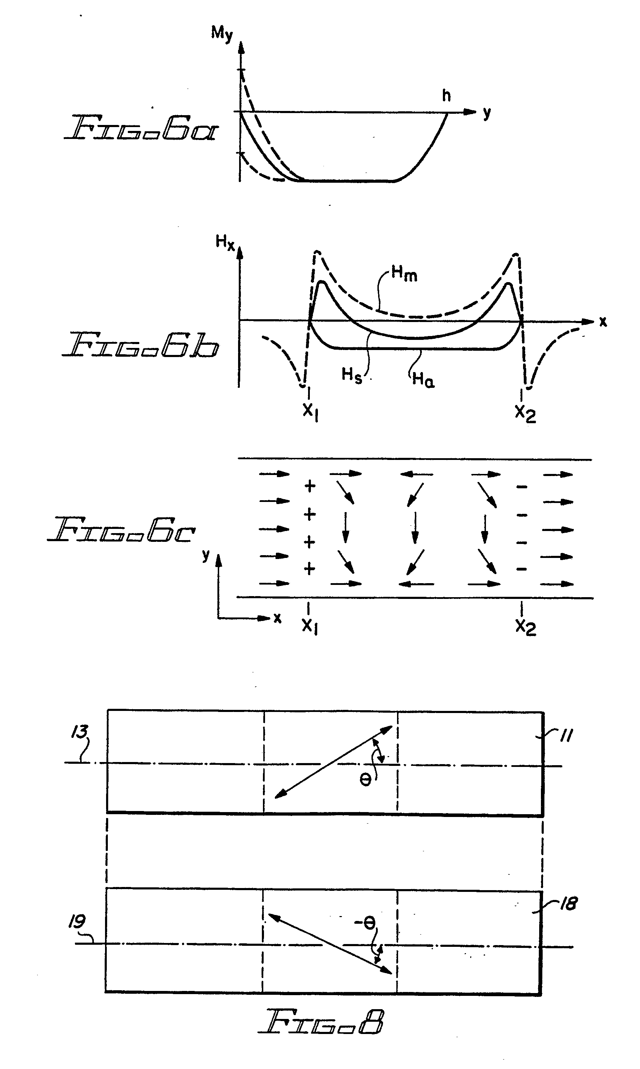

The magnetoresistive (MR) read transducer utilizes an MR sensor 10 (Figs. 1 - 3), and the MR sensor 10 can be divided into two regions, the central active region 12, where actual sensing of data is accomplished, and end regions 14. In accordance with the preferred embodiment, the two regions should be biased in different manners. For stable operation the central active region 12 requires a longitudinal bias in addition to transverse bias. The longitudinal bias is provided by the longitudinally magnetized end regions 14. One method for producing the longitudinally magnetized end regions is by means of an exchange bias layer 16. Another method for producing the longitudinally magnetized end regions is by means of a hard magnetic layer. The transverse bias is produced by soft magnetic layer 18 which is separated from the MR layer 11 by a nonmagnetic spacer layer 20 whose purpose is to prevent, within the central active region 12, a magnetic exchange bias between the MR layer 11 and the soft magnetic film layer 18. Conductor leads 22 and 24 serve as the electrical path to conduct bias current from current source 26 to the MR sensor and to conduct the output signal to the external sensing means 28. The distance between the inner edges of conductor leads 22 and 24 comprises the part of the active region 12 over which the output signal is sensed.

The operating margins of such longitudinally constrained MR sensors can be substantially improved by tilting the induced anisotropy in the MR film 11 and the soft magnetic layer 18 in opposite directions.

The response of a ferromagnetic film, such as the MR film 11, to varied field excursions are shown in Fig. 4. $H_x$ and $H_y$ are the components of applied field, and $H_k$ is the magnitude of induced anisotropy (having its "easy axis" aligned with the x-axis). The figure shows that the mode of response depends on the applied field excursion relative to the film's anisotropy as was discussed by S. Middelhoek in "Static Reversal Processes in Thin Ni-Fe Films", IBM Journal of Research and Development, Vol. 6, No. 4, October 1962. For example, the "critical curve" shown in Fig. 4a represents the boundary from "coherent rotation" into the (shaded) region of "incoherent switching". In an MR sensor, excursions across this "critical curve" must be avoided. The usable range is further restricted, as shown in Fig. 4b, because there also exists local dispersion of anisotropy. Another limitation is due to wall motion whose threshold is shown in Fig. 4c, statically determined by a coercivity, $H_w$, but further reduced dynamically by a mechanism called wall-creeping.

The usable operating range is the intercept of all the non-shaded areas, and such a range with some safety margin is shown in Fig. 4d with minor simplifications. The MR sensor must be designed to confine the excitation to stay within these margins, and this can be done by adjusting either the margins or the range of excitation. The former is accomplished through changes in the anisotropy, and the latter by using bias fields to shift the range of excitation.

Fig. 5a shows the superposition of all static and dynamic fields acting on the MR sensor layer 11 and the soft magnetic layer 18. In this figure, $H_e$ is the excitation from the recording medium, $H_t$ is the current-produced transverse bias on soft magnetic layer 18, while $H_{t'}$ is the associated bias on the MR sensor layer 11. A magnetostatic stabilizing field serves to shift the excitation to the right. This field originates from the end regions 14 with a value $H_{m''}$ that decreases to $H_m$, in the middle of the active region 12. The MR sensor layer 11 can be provided with the widest margins relative to the range of excitation shown in Fig 5b, the anisotropy is rotated by a small angle in the range of about 5 to about 30 degrees. The thus modified margins are shown in Fig 5c.

By reference to Fig 5c, it can be seen that canting has widened the margins for the MR sensor layer 11, but the contrary has happened to the soft magnetic layer 18. This may create problems, as shown in Fig. 6a, which shows the quiescent magnetization profile, $M_y$, and the modulations thereof in response to positive and negative values of excitation. Fig. 6b shows the condition of the soft magnetic layer 18 in greater detail. In effect, the canted anisotropy creates a longitudinal field, $H_a$, which, because of opposite transverse bias, has opposite polarity in the MR sensor layer 11 and the soft magnetic layer 18. The sense of canting has been chosen so that in the MR sensor layer 11, $H_a$ adds to the magnetostatic field, $H_m$. Consequently, the two fields subtract in the soft magnetic layer 18. But worse, the profile of the two fields is such that the combined stabilizing field, $H_s$, reverses its polarity within the active region 12. As shown in Fig. 6c, this results in a "buckled" magnetization configuration. In continuous films, buckling is a recognized cause of open hard-axis loops as was discussed by S. Middelhoek in "The Influence of the Anisotropy Variations on the Domain Behaviour of Ni-Fe Films", Symposium of the Electric and Magnetic Properties of Thin Metallic Layers, Leuven, Belgium, 1961. It does so by retaining the magnetization in a locked state until, at some field threshold, released by a switching process. Buckling would cause similarly irreversible responses in the soft magnetic layer 18 whenever the excitation exceeds the switching threshold. But even short of that, it means that the MR read transducer's response varies with the buckling configuration.

To help provide a coherent rotation response requires a unidirectional stabilizing field to tilt the magnetization from the hard axis. The tilt must be large enough to exceed the angular dispersion of the magnetization. Now in principle, the stabilizing field on the soft magnetic layer could have the same or opposite polarity as the one acting on the MR sensor layer. Depending on the choice, the magnetization of the two films responds to an excitation with identical or opposite sense of rotation. In a design to produce both anisotropy as well as magnetostatic bias, the easy axes of the soft magnetic layer is canted counter (by an angle $\theta$) to the one of the MR sensor layer. That design makes the anisotropy and magnetostatic contributions to the stabilizing field additive not only in the MR sensor layer, but also in the soft magnetic layer. The consequences of this design are shown in Fig. 7 which shows the resultant coherent rotation margins.

The design is implemented by setting the easy axis direction by applying a magnetic field in the desired direction during deposition of the layers. As shown in Fig. 8, the MR sensor layer 11 has the easy axis oriented at an angle $\theta$ to the longitudinal axis of layer 11, and the soft magnetic layer 18 has its easy axis oriented at an angle $-\theta$ to the longitu-

dinal axis of layer 18.

A magnetoresistive (MR) sensor, has been described, in which the easy axis of the MR element and the soft magnetic biasing layer are tilted at an acute angle to the longitudinal axis of the sensor which is substantially equal, but in the opposite sense. The magnetoresistive read transducer as hereabove described finds particular, but not exclusive, application to a read head in magnetic storage devices which are particularly sensitive to the performance of their read heads.

## Claims

1. A magnetoresistive read transducer assembly comprising:
   a thin film of magnetoresistive conductive layer formed of magnetic material, said magnetoresistive conductive layer having a longitudinal axis and substantially longitudinally magnetized end regions separated by a central region; and
   a thin film of soft magnetic material superimposed substantially parallel to but spaced from said magnetoresistive layer;
   said thin film of magnetoresistive conductive layer having an easy axis of magnetisation which is tilted at a predetermined angle with respect to said longitudinal axis; said thin film of soft magnetic material having an easy axis or magnetisation tilted by an angle substantially the same as said predetermined angle with respect to said longitudinal axis but having an opposite sense to the easy axis of said thin film of magnetoresistive conductive layer.

2. The magnetoresistive read transducer assembly as claimed in claim 1 wherein said predetermined angle is an acute angle.

3. The magnetoresistive read transducer assembly as claimed in any of claims 1 or 2 wherein said predetermined angle is between substantially 5 and substantially 30 degrees.

4. A magnetoresistive read transducer assembly as claimed in any of the preceding claims wherein said thin film of soft magnetic material is spaced from said magnetoresistive layer by a layer of non magnetic material.

5. A magnetic storage device including a magnetoresistive read transducer assembly as claimed in any preceding claim.

6. A method of manufacturing a magnetoresistive read transducer assembly as claimed in any of claims 1 to 4 including the step of setting the easy axes directions by applying a magnetic field during deposition of the layers.

*FIG-1*

*FIG-2*

*FIG-3*

*FIG-5a*

*FIG-5b*

*FIG-5c*

FIG.4a

FIG.4b

FIG.4c

FIG.4d

FIG.7a

FIG.7b

FIG. 6a

FIG. 6b

FIG. 6c

FIG. 8